# EUROPEAN PATENT APPLICATION

(11) **EP 2 338 672 A2**
(43) Date of publication of application: **29.06.2011**
(21) Application number: 10425372.9
(22) Date of filing: 06.12.2010
(51) Int. Cl.: B29D 99/00

(54) **Method for coupling a wood panel or similar, coated in surface finishing materials with built-in elements in the panel itself, and products obtained by said method**

(30) Priority: 10.12.2009 IT RM20090652
(71) Applicant: Compositi & Co. s.r.l., I-60129 Ancona (AN) (IT)
(72) Inventor: Cartuccia, Giovanni, 60129 Ancona (IT); Mosci, Massimo, 60129 Ancona (IT)
(74) Representative: Gitto, Serena

(57) **Abstract**

The invention relates to a method for coupling a coated panel (1) and a fixture element (2) destined to said panel (1), said coated panel (1) being particularly of the type to be employed as surface for furniture and furnishing, and comprising a panel (9) comprised of wood or paperboard or foam or similar materials, and every combination of the same materials, as well as a surface coating and finishing layer (10) supported by said panel (9); said fixture element (2) being particularly shaped with a curved surface and having a thickness of the same order of size of the coated panel (1) thickness, said method comprising the steps of:
-taking a coated panel (1) having a finishing surface layer (10) at least on its upper surface;
-realizing a through opening (3) in said coated panel (1), such as a window, for said fixture element (2) to be coupled, said opening (3) being delimitated by a edge perimeter zone (4') (4'), provided in correspondence of the thickness of the coated panel (1);
-inserting a first mould half shell in said opening (3), said mould for realizing said fixture element (2) to be coupled;
-inserting a second half shell mould in said opening (3), said mould for realizing said fixture element (2) to be coupled, said first and second half shell realizing, in the space realized between them and said edge perimeter zone (4'), a mould substantially defining the shape of said fixture element (2) to be realized;
-injecting fluid material within said mould in order to realize, by mould shaping, said fixture element (2), and for coupling the same with said coated panel (1), coupling substantially occurring in correspondence of said perimeter zone (4'); and
-removing said mould half shells.

## Description

The present invention relates to a method for coupling a wood panel or like, coated with surface finishing materials, and elements to be built-in within the same panel.

The invention further concerns products obtained by the same method.

More specifically, the invention concerns a method of the above kind permitting obtaining coupling with an absolutely invisible joining or coupling line.

As it is well known, during last decades it diffused the use, particularly when designing and realising kitchens, bathrooms, ecc, of planes comprising an inner central part or core, made up of mainly wood based material, or by synthetic material resembling said mainly wood based material as far as its mechanical features are concerned, such as PVC, foamed materials, materials with an alveolar structure, ecc., that are coated by sheets made up of more precious materials, in order to confer to the panel the required aesthetic and/or functional features.

In other words, panels coated in order to confer to the same a more pleasant aesthetic aspect or to provide them with suitable mechanical surface features, such as, e.g., resistance to scratches or shocks, waterproof ad like.

Precious materials employed for coating said panels are natural materials, such as wood, or synthetic materials.

Once realised the panels, the needing exist of building-in one or more accessory, such as a sink or like, within the same, in a set position, by realising suitable housings in the same plane.

A first problem encountered when realising said planes is connected with coating of central core by coating material.

Another remarkable drawback to obtain an optimum final result both under the structural and aesthetical point of view is that of coupling panel and fixture without any track trace of the coupling zone.

To this end, known technique provide making coupling by special glues, which are substantially, but not completely not visible, so that a very thin coupling line is realised.

However, besides the fact that said coupling line can be observed, all materials employed for coupling deteriorate during time, changing their colour, ecc., so that, after a set time period, coupling line is always more visible, remarkably destroying kitchen or bathroom aesthetic aspect.

Bearing in mind the above, it is provided the solution according to the present invention, permitting solving the above mentioned drawbacks, suggesting a method for coupling between a panel and an element to be built-in in the same panel, absolutely and permanently preventing any problem due to the presence of coupling between panel and element to be built-in.

It is therefore specific of the present invention a method for coupling a coated panel and a fixture element destined to said panel, said coated panel being particularly of the type to be employed as surface for furniture and furnishing, and comprising a panel comprised of wood or paperboard or foam or similar materials, and every combination of the same materials, as well as a surface coating and finishing layer supported by said panel; said fixture element being particularly shaped with a curved surface and having a thickness of the same order of size of the coated panel thickness, said method comprising the steps of:
- taking a coated panel having a finishing surface layer at least on its upper surface;
- realizing a through opening in said coated panel, such as a window, for said fixture element to be coupled, said opening being delimitated by an edge perimeter zone, provided in correspondence of the thickness of the coated panel;
- inserting a first mould half shell in said opening, said mould for realizing said fixture element to be coupled;
- inserting a second half shell mould in said opening, said mould for realizing said fixture element to be coupled, said first and second half shell realizing, in the space realized between them and said edge perimeter zone, a mould substantially defining the shape of said fixture element to be realized;
- injecting fluid material within said mould in order to realize, by mould shaping, said fixture element, and for coupling the same with said coated panel, coupling substantially occurring in correspondence of said perimeter zone; and
- removing said mould half shells.

Further features of the method according to the invention are described in the dependent claims.

The invention further describes products obtained by the method described in the above.

Present invention will be now described, for illustrative, but not limitative, purposes, according to a preferred embodiment, with particular reference to the enclosed figures, wherein:
figure 1 is a perspective view of a product obtained by a method according to the invention;
figure 2 is a section view of the product shown in figure 1;
figures 3a - 3d show the step for carrying out the method according to the invention.

The method according to the invention will be described in the following with reference to integration of a sink within a kitchen top plane, but it is to be understood that the same method can be employed for realising different products and workings, besides for coupling more than two elements at the same time.

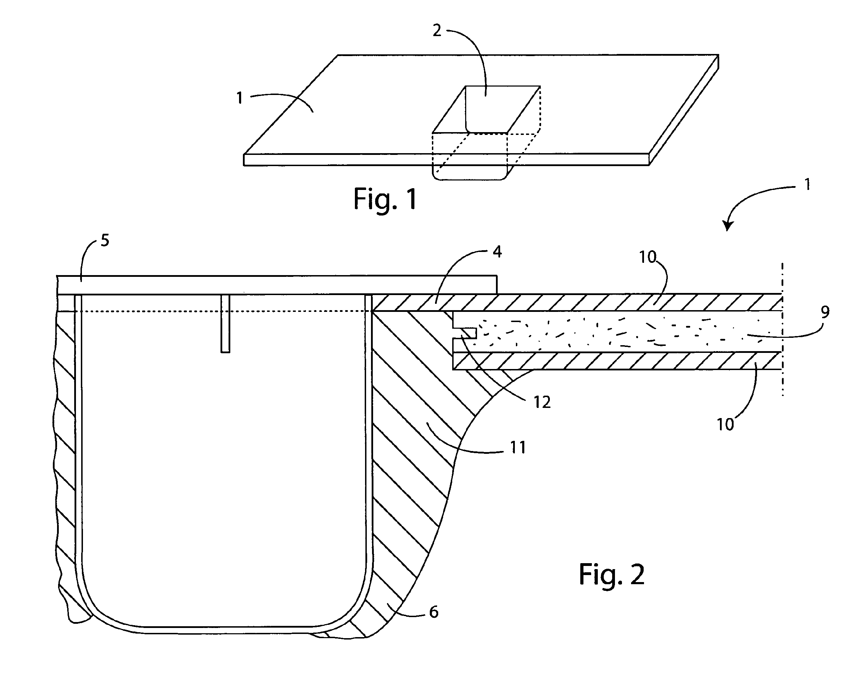

Making reference to figures 1 - 3, it is shown a plane or "top" for a kitchen, indicated by reference number 1, in which a sink 2 must be built-in.

Plane 1 can be comprised of any suitable material, and can have any desired shape. Particularly, it will be a plane 1 comprising a core made up of wood, hardboard, and like, coated by a synthetic coating, that can be applied by injection moulding, and having both a structural (increase of resistance, of anti-scratching properties, and generally speaking of mechanical properties of plane 1) and aesthetic.

Solution suggested by the present invention permits building-in sink 2 in plane 1 so that, once completed the working, it is seamless at coupling between plane 1 and sink 2.

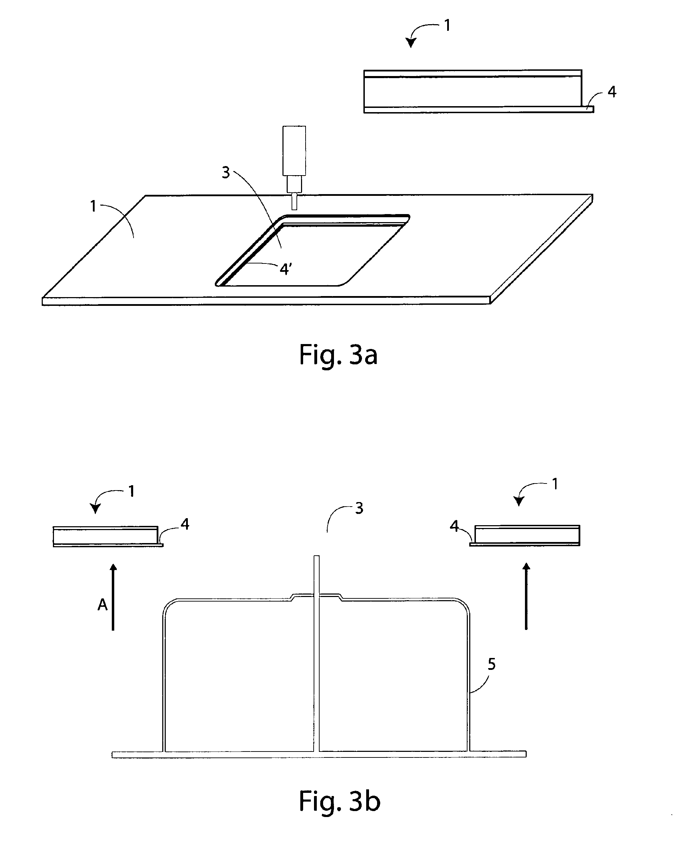

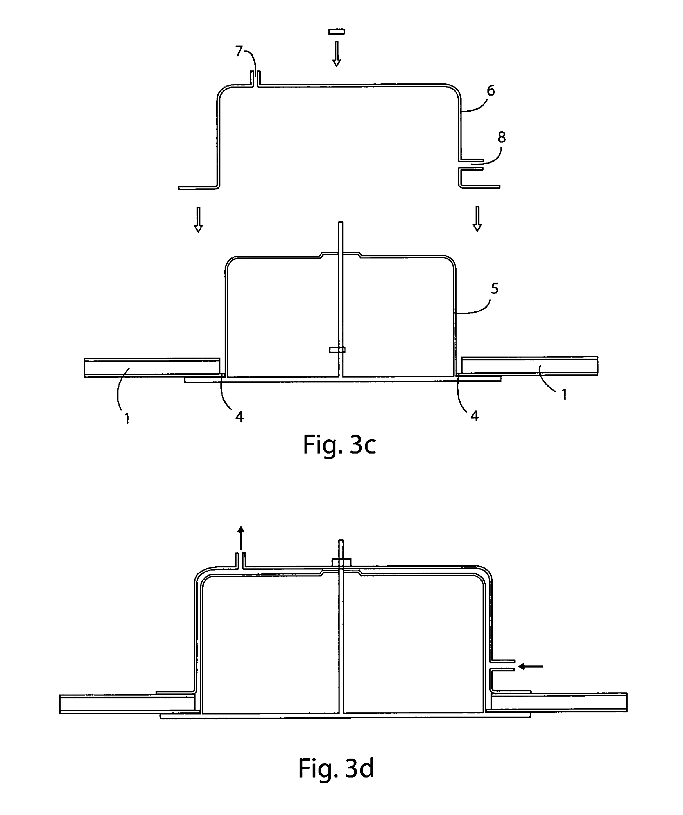

Said result will be better obtained by the specification of working steps of method according to the inventive method, making also reference to figure 3.

During first step (figure 3a), a through passage 3 is realised in plane 1, to receive sink 2 (not shown in this figure). When carrying out through passage 3, a projecting portion 4 will be realised (see particular of section of figure 3a), on plane 1, namely on edge of through passage 3, in correspondence of upper side of plane 1 (in this figure shown upside down).

In an embodiment of method according to the invention, it can be provided a step for realising, on said perimeter zone 4', at least one housing 12, destined to receive said fluid material during the injection step, in order to obtain a better anchoring between said coated panel 1 and said fitting element 2.

Now, shell 5, or inner shell, is inserted (figure 3b) in correspondence of through passage 3, according to insertion arrows A shown in figure 3b, from side of upper face of plane 1. Thus (figure 3c), a second shell 6, or outer shell, is inserted, according to arrows B direction. Second shell 6 will be provided with an opening 7 to realise vacuum, and an opening 8 for injection of coating material.

Observing now in detail section view of figure 2, showing shell 5 - plane 1 - shell 6 assembly in its correct position, it can be observed result obtained by method according to the invention, and particularly effect of projecting portion 4 on finale product.

Particularly, in figure 2, central material of plane 2 is indicated by reference number 9, upper and lower covering resin of central material 9 is indicated by reference number 10, and by reference number 11 it is indicated material injected while carrying out method according to the invention.

Projecting portion 4 realised on plane 1 (in correspondence of through hole 3 perimeter for sink 2) realises a perfect integration between plane 1 and sink 2, by injection material 11, so that, once removed two shells 5 and 6, final product will not have any discontinuity line in correspondence of coupling between plane 1 and sink 2.

Preferably, as already mentioned, although not indispensable, it can be used, to obtain coated plane 1, a coating method providing the following steps:
- preparing a mould;
- inserting a panel to be coated within said mould, so that said panel is spaced from the bottom surface of said mould;
- introducing a fluid coating material within said mould until when said panel is fully submerged;
- withdrawing said coated panel from said mould when said coating material solidified.

When realising the mould, it is possible carrying out the following steps:
- preparing a base wall defining said bottom surface;
- connecting a plurality of lateral walls with said base wall, in order to define a housing space for said panel to be coated, at least one of said lateral walls being a movable wall;
- fixing said lateral walls to said base wall by mechanical or magnetic means.

Furthermore, said mould can provide a lid that can be put on the same lid before introducing coating material, possibly up to fully filling in said space. Among the various existing possibilities, coating material, both for plane 1 material and for material to be injected when practicing the method according to the invention, comprises at least a synthetic resin, preferably an epoxy resin or an acrylic resin or a polyurethane resin or a polyester resin, and a catalyser additive, preferably comprising a portion of aluminium tri-hydrate or eventually a portion of powder mineral material.

In a preferred embodiment, it is provided a reinforcing curved element, preferably comprised of metal, coupled with said wood panel, and provided within said mould, so as to be flooded within said material, when injected. The above permits reinforcing built-in element, so as to support higher loads.

Present invention has been described for illustrative but not limitative purposes, according to its preferred embodiments, but it is to be understood that variations and/or modifications can be introduced by those skilled in the art without departing from the relevant scope as defined in the enclosed claims.

## Claims

1. Method for coupling a coated panel (1) and a fixture element (2) destined to said panel (1), said coated panel (1) being particularly of the type to be employed as surface for furniture and furnishing, and comprising a panel (9) comprised of wood or paperboard or foam or similar materials, and every combination of the same materials, as well as a surface coating and finishing layer (10) supported by said panel (9); said fixture element (2) being particularly shaped with a curved surface and having a thickness of the same order of size of the coated panel (1) thickness, said method comprising the steps of:
- taking a coated panel (1) having a finishing surface layer (10) at least on its upper surface;
- realizing a through opening (3) in said coated panel (1), such as a window, for said fixture element (2) to be coupled, said opening (3) being delimitated by a edge perimeter zone (4') (4'), provided in correspondence of the thickness of the coated panel (1);
- inserting a first mould half shell in said opening (3), said mould for realizing said fixture element (2) to be coupled;
- inserting a second half shell mould in said opening (3), said mould for realizing said fixture element (2) to be coupled, said first and second half shell realizing, in the space realized between them and said edge perimeter zone (4'), a mould substantially defining the shape of said fixture element (2) to be realized;
- injecting fluid material within said mould in order to realize, by mould shaping, said fixture element (2), and for coupling the same with said coated panel (1), coupling substantially occurring in correspondence of said perimeter zone (4'); and
- removing said mould half shells.

2. Method according to claim 1, **characterized in that** the step of realizing a through opening (3) in said coated panel (1) comprises realizing in said perimeter zone (4') a projecting portion (4), having a substantially perimeter profile for said through opening (3), obtained in the coating layer (10) of the upper surface of the coated panel (1), and mainly projecting toward centre of said through opening (3) with respect to the remaining portion of the perimeter zone (4'), obtained from said panel (9).

3. Method according to claim 1 or 2, **characterized in that** it comprises a step of realization, on said perimeter zone (4'), of at least an recess (12), to receive said fluid material during the injection step, in order to obtain a better anchoring between said coated panel (1) and said fixture element (2).

4. Method according to claim 2 or 3, **characterized in that** the step of inserting within said through opening (3) a first mould half shell for realizing the fixture element (2) to be coupled, comprises the step of coupling said first mould half shell with said projecting portion (4) in order to realize a sealing during the injection of the fluid material, and so that said injected fluid material is contiguous to said coating and finishing layer (10) of said coated panel (1).

5. Method according to each one of the preceding claims, **characterized in that** it comprises, before the injection step, a step of creation of vacuum within said mould.

6. Method according to each one of the preceding claims, **characterized in that** it is provided the coupling of a plurality of fixtures elements with the same coated panel (1).

7. Method according to each one of the preceding claims, **characterized in that** material injected within said mould is the same material employed for the upper finishing coating of said panel.

8. Method according to each one of the preceding claims, **characterized in that** said material comprises at least a synthetic resin and a catalyzing additive, said synthetic resin being preferably an epoxy or acrylic or polyurethane resin or polyester based resin.

9. Method according to claim 8, **characterized in that** said coating material further comprises a portion of aluminium tri-hydrate.

10. Method according to claim 8 or 9, **characterized in that** said coating material further comprises a portion of powder or granule mineral material.

11. Method according to one of the preceding claims, **characterized in that** said steps of creating vacuum and injecting material within the mould are realized by opening (3)s realized on said second half shell or outer half shell.

12. Method according to one of the preceding claims, **characterized in that** said coated panel (1) is obtained by the steps of:
- preparing a mould;
- inserting a panel (9) to be coated within said mould;
- introducing a flowable coating material within said mould up to fully submerge said panel (9);
- extracting said panel from said mould after that said coating material is cured on the same panel, realizing said coating layer (10) and thus obtaining said coated panel (1).

13. Method according to claim 12, **characterized in that** step of insertion of a panel (9) to be coated within said mould provides that said panel (9) is provided spaced from a bottom surface of said mould.

14. Method according to one of the preceding claims 12 or 13, **characterized in that** the step of preparing said mould comprises the steps of
- preparing a base wall defining said bottom surface;
- connecting a plurality of lateral walls with said base wall in order to define a receiving space for said panel (9) to be coated, at least one of said lateral walls being a movable wall;
- fixing said lateral walls to said base wall by mechanical or magnetic means.

15. Method according to claim 14, **characterized in that** it further comprises a step of closure of said space by a lid that can be placed over said mould before the step of introduction of the coating material.

16. Method according to one of the preceding claims 14 or 15, **characterized in that** step of introduction of the coating material is realized up to fully filling in said space.

17. Method according to one of the preceding claims 13 -16, **characterized in that** the step of introduction of the coating material is realized injecting said coating material through said bottom surface of said mould.

18. Method according to one of the preceding claims, **characterized in that** it comprises a reinforcement curved element, preferably comprised of metal, coupled with said wood or like panel and provided within said mould, so as to be buried within said injected material for realizing said fixture element to be coupled.

19. Products obtained by the method according to each one of the claims 1 -18.
